# EUROPEAN PATENT SPECIFICATION

(11) **EP 3 237 149 B1**
(45) Date of publication and mention of the grant of the patent: **07.10.2026**
(21) Application number: 15873813.8
(22) Date of filing: 24.12.2015
(51) Int. Cl.: B24D 18/00, B24D 3/00, C09K 3/14

(54) **SHAPED ABRASIVE PARTICLE FRACTIONS AND METHOD OF FORMING SAME**
GEFORMTE SCHLEIFPARTIKELFRAKTIONEN UND VERFAHREN ZUR FORMUNG DAVON
FRACTIONS DE PARTICULE ABRASIVE FAÇONNÉE ET LEUR PROCÉDÉ DE FORMATION

(30) Priority: 24.12.2014 US 201414582448
(43) Date of publication of application: 01.11.2017
(73) Proprietor: Saint-Gobain Ceramics&Plastics, Inc., Worcester, MA 01615 (US)
(72) Inventor: LOUAPRE, David F., 75013 Paris (FR); SALVATORE, James, Sutton, MA 01590 (US); MARAZANO, Alexandra, 26750 Saint Paul lès romans (FR)
(74) Representative: Zimmermann & Partner Patentanwälte mbB
(86) International application number: PCT/US2015/000344
(87) International publication number: WO 2016/105543

(56) References cited:
- US-A1- 2004 018 802
- US-A1- 2009 165 394
- US-A1- 2009 165 394
- US-A1- 2011 146 509
- US-A1- 2011 146 509
- US-A1- 2013 212 952
- US-A1- 2014 182 217
- US-A1- 2014 182 217
- US-A1- 2014 325 917
- US-A1- 2014 325 917

## Description

### FIELD OF THE DISCLOSURE

The following is directed to shaped abrasive particles, and more particularly, to shaped abrasive particles having certain features and methods of forming such shaped abrasive particles.

### DESCRIPTION OF THE RELATED ART

Abrasive articles incorporating abrasive particles are useful for various material removal operations including grinding, finishing, polishing, and the like. Depending upon the type of abrasive material, such abrasive particles can be useful in shaping or grinding various materials in the manufacturing of goods. Certain types of abrasive particles have been formulated to date that have particular geometries, such as triangular shaped abrasive particles and abrasive articles incorporating such objects. See, for example, U.S. Pat. Nos. 5,201,916; 5,366,523; and 5,984,988.

Previously, three basic technologies that have been employed to produce abrasive particles having a specified shape, which are fusion, sintering, and chemical ceramic. In the fusion process, abrasive particles can be shaped by a chill roll, the face of which may or may not be engraved, a mold into which molten material is poured, or a heat sink material immersed in an aluminum oxide melt. See, for example, U.S. Pat. No. 3,377,660. In sintering processes, abrasive particles can be formed from refractory powders having a particle size of up to 10 micrometers in diameter. Binders can be added to the powders along with a lubricant and a suitable solvent to form a mixture that can be shaped into platelets or rods of various lengths and diameters. See, for example, U.S. Pat. No. 3,079,242. Chemical ceramic technology involves converting a colloidal dispersion or hydrosol (sometimes called a sol) to a gel or any other physical state that restrains the mobility of the components, drying, and firing to obtain a ceramic material. See, for example, U.S. Pat. Nos. 4,744,802 and 4,848,041. Other relevant disclosures on shaped abrasive particles and associated methods of forming and abrasive articles incorporating such particles are available at: http://www.abel-ip.com/publications/. US 2013/212952 A1 is concerned with abrasive particles, methods for making abrasive particles, and abrasive articles including abrasive particles. US 2014/325917 A1 is concerned with a method of forming a mixture including a ceramic material into a sheet, sectioning at least a portion of the sheet using a mechanical object and forming at least one shaped abrasive particle from the sheet, such that the at least one shaped abrasive particle can have a two-dimensional shape as viewed in a plane defined by a length and a width of the shaped abrasive particle.

The industry continues to demand improved abrasive materials and abrasive articles.

### SUMMARY

According to a first aspect, a shaped abrasive particle fraction as defined in claim 7 generally includes a body including a bottom surface, an upper surface, and a side surface extending between the bottom surface and the upper surface, wherein the upper surface defines a shovel shape including a concave surface having a tip region including at least one tip corner and at least one rear region defining at least one rear corner, wherein the at least one tip corner has a tip sharpness that is greater than a tip sharpness of the at least one rear corner.

In another aspect, a method of forming a shaped abrasive particle as defined in claim 1 generally includes forming a precursor shaped abrasive particle having a body including at least one predetermined stress concentration point and at least one predetermined stress concentration vector, and processing the precursor shaped abrasive particle and fracturing the precursor shaped abrasive particle substantially along the predetermined stress concentration vector to form a fractured shaped abrasive particle.

### BRIEF DESCRIPTION OF THE DRAWINGS

The present disclosure may be better understood, and its numerous features and advantages made apparent to those skilled in the art by referencing the accompanying drawings.
FIG. 1A includes a portion of a system for forming shaped abrasive particle fractions in accordance with an embodiment.
FIG. 1B includes an image of a portion of the production tool of the system of FIG. 1A for forming a shaped abrasive particle fractions in accordance with an embodiment.
FIG. 2 includes a top down illustration of a precursor shaped abrasive particle according to an embodiment.
FIG. 3 includes an image of shaped abrasive particle fractions according to the invention.
FIG. 4 includes an image of a coated abrasive including shaped abrasive particle fractions according to an embodiment.
FIG. 5 includes an image of a shaped abrasive particle fraction in a side orientation according to an embodiment.
FIG. 6 includes a plot of tangential force divided by groove area as a function of groove area for a sample representative of an embodiment and a conventional sample.
FIG. 7 includes a top down image of a conventional shaped abrasive particle.

### DETAILED DESCRIPTION

The following is directed to methods of forming shaped abrasive particle fractions and features of such shaped abrasive particle fractions. The shaped abrasive particle fractions may be used in various abrasive articles, including for example bonded abrasive articles, coated abrasive articles, and the like. Alternatively, the shaped abrasive particle fractions of the embodiments herein may be utilized in free abrasive technologies, including for example grinding and/or polishing slurries.

The shaped abrasive particle fractions are obtained through the formation of a sol-gel, that can be shaped in an opening of a production tooling (e.g., a screen or mold), and formed into a precursor shaped abrasive particle. Screen printing methods of forming shaped abrasive particles are generally described in U.S. Pat. No. 8,753,558. A suitable method of forming shaped abrasive particles according to a conventional molding process is described in US Pat. Nos. 5,201,916.

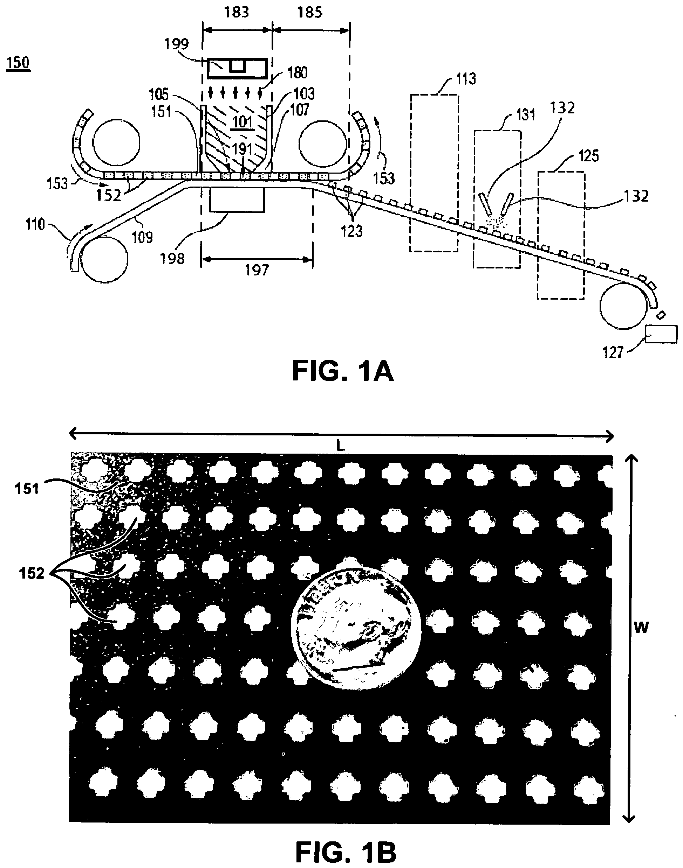

According to one particular embodiment, the process of forming the shaped abrasive particles can be a screen printing process. FIG. 1A includes an illustration of a system 150 for forming shaped abrasive particle fractions in accordance with one, non-limiting embodiment. The process of forming shaped abrasive particle fractions is initiated by forming a mixture 101 including a gel formed of a ceramic powder material and a liquid, wherein the gel is characterized as a shape-stable material having the ability to substantially hold a given shape even in the green (i.e., unfired) state. In accordance with an embodiment, the gel can be formed of the ceramic powder material as an integrated network of discrete particles.

The mixture 101 may contain a certain content of solid material, liquid material, and additives such that it has suitable rheological characteristics for use with the process detailed herein. That is, in certain instances, the mixture can have a certain viscosity, and more particularly, suitable rheological characteristics that form a dimensionally stable phase of material that can be formed through the process as noted herein. A dimensionally stable phase of material is a material that can be formed to have a particular shape and substantially maintain the shape for at least a portion of the processing subsequent to forming. **In** certain instances, the shape may be retained throughout subsequent processing, such that the shape initially provided in the forming process is present in the finally-formed object.

The mixture 101 can be formed to have a particular content of solid material, which is the ceramic powder material. For example, in one embodiment, the mixture 101 can have a solids content of at least about 25 wt%, such as at least about 35 wt%, or even at least about 38 wt% for the total weight of the mixture 101. Still, in at least one non-limiting embodiment, the solids content of the mixture 101 can be not greater than about 75 wt%, such as not greater than about 70 wt%, not greater than about 65 wt%, not greater than about 55 wt%, not greater than about 45 wt%, or not greater than about 42 wt%. It will be appreciated that the content of the solids materials in the mixture 101 can be within a range between any of the minimum and maximum percentages noted above.

According to one embodiment, the ceramic powder material can include an oxide, a nitride, a carbide, a boride, an oxycarbide, an oxynitride, and a combination thereof. In particular instances, the ceramic material can include alumina. More specifically, the ceramic material may include a boehmite material, which may be a precursor of alpha alumina. The term "boehmite" is generally used herein to denote alumina hydrates including mineral boehmite, typically being Al2O3•H2O and having a water content on the order of 15%, as well as pseudoboehmite, having a water content higher than 15%, such as 20-38% by weight. It is noted that boehmite (including pseudoboehmite) has a particular and identifiable crystal structure, and therefore a unique X-ray diffraction pattern. As such, boehmite is distinguished from other aluminous materials including other hydrated aluminas such as ATH (aluminum trihydroxide), a common precursor material used herein for the fabrication of boehmite particulate materials.

Furthermore, the mixture 101 can be formed to have a particular content of liquid material. Some suitable liquids may include water. In accordance with one embodiment, the mixture 101 can be formed to have a liquid content less than the solids content of the mixture 101. In more particular instances, the mixture 101 can have a liquid content of at least about 25 wt% for the total weight of the mixture 101. In other instances, the amount of liquid within the mixture 101 can be greater, such as at least about 35 wt%, at least about 45 wt%, at least about 50 wt%, or even at least about 58 wt%. Still, in at least one non-limiting embodiment, the liquid content of the mixture can be not greater than about 75 wt%, such as not greater than about 70 wt%, not greater than about 65 wt%, not greater than about 62 wt%, or even not greater than about 60 wt%. It will be appreciated that the content of the liquid in the mixture 101 can be within a range between any of the minimum and maximum percentages noted above.

Furthermore, to facilitate processing and forming shaped abrasive particles according to embodiments herein, the mixture 101 can have a particular storage modulus. For example, the mixture 101 can have a storage modulus of at least about 1x10⁴ Pa, such as at least about 4x10⁴ Pa, or even at least about 5x10⁴ Pa. However, in at least one non-limiting embodiment, the mixture 101 may have a storage modulus of not greater than about 1x10⁷ Pa, such as not greater than about 2x10⁶ Pa. It will be appreciated that the storage modulus of the mixture 101 can be within a range between any of the minimum and maximum values noted above.

The storage modulus can be measured via a parallel plate system using ARES or AR-G2 rotational rheometers, with Peltier plate temperature control systems. For testing, the mixture 101 can be extruded within a gap between two plates that are set to be approximately 8 mm apart from each other. After extruding the gel into the gap, the distance between the two plates defining the gap is reduced to 2 mm until the mixture 101 completely fills the gap between the plates. After wiping away excess mixture, the gap is decreased by 0.1 mm and the test is initiated. The test is an oscillation strain sweep test conducted with instrument settings of a strain range between 0.01% to 100%, at 6.28 rad/s (1 Hz), using 25-mm parallel plate and recording 10 points per decade. Within 1 hour after the test completes, the gap is lowered again by 0.1 mm and the test is repeated. The test can be repeated at least 6 times. The first test may differ from the second and third tests. Only the results from the second and third tests for each specimen should be reported.

Furthermore, to facilitate processing and forming shaped abrasive particles according to embodiments herein, the mixture 101 can have a particular viscosity. For example, the mixture 101 can have a viscosity of at least about 4x10³ Pa s, at least about 5x10³ Pa s, at least about 6x10³ Pa s, at least about 8x10³ Pa s, at least about 10x10³ Pa s, at least about 20x10³ Pa s, at least about 30x10³ Pa s, at least about 40x10³ Pa s, at least about 50x10³ Pa s, at least about 60x10³ Pa s, or at least about 65x10³ Pa s. In at least one non-limiting embodiment, the mixture 101 may have a viscosity of not greater than about 100x10³ Pa s, such as not greater than about 95x10³ Pa s, not greater than about 90x10³ Pa s, or even not greater than about 85x10³ Pa s. It will be appreciated that the viscosity of the mixture 101 can be within a range between any of the minimum and maximum values noted above. The viscosity can be measured in the same manner as the storage modulus as described above.

Moreover, the mixture 101 can be formed to have a particular content of organic materials including, for example, organic additives that can be distinct from the liquid to facilitate processing and formation of shaped abrasive particles according to the embodiments herein. Some suitable organic additives can include stabilizers, binders such as fructose, sucrose, lactose, glucose, UV curable resins, and the like.

Notably, the embodiments herein may utilize a mixture 101 that can be distinct from slurries used in conventional forming operations. For example, the content of organic materials within the mixture 101 and, in particular, any of the organic additives noted above, may be a minor amount as compared to other components within the mixture 101. In at least one embodiment, the mixture 101 can be formed to have not greater than about 30 wt% organic material for the total weight of the mixture 101. In other instances, the amount of organic materials may be less, such as not greater than about 15 wt%, not greater than about 10 wt%, or even not greater than about 5 wt%. Still, in at least one non-limiting embodiment, the amount of organic materials within the mixture 101 can be at least about 0.01 wt%, such as at least about 0.5 wt% for the total weight of the mixture 101. It will be appreciated that the amount of organic materials in the mixture 101 can be within a range between any of the minimum and maximum values noted above.

Moreover, the mixture 101 can be formed to have a particular content of acid or base, distinct from the liquid content, to facilitate processing and formation of shaped abrasive particles according to the embodiments herein. Some suitable acids or bases can include nitric acid, sulfuric acid, citric acid, chloric acid, tartaric acid, phosphoric acid, ammonium nitrate, and ammonium citrate. According to one particular embodiment in which a nitric acid additive is used, the mixture 101 can have a pH of less than about 5, and more particularly, can have a pH within a range between about 2 and about 4.

The system 150 of FIG. 1A, can include a die 103. As illustrated, the mixture 101 can be provided within the interior of the die 103 and configured to be extruded through a die opening 105 positioned at one end of the die 103. As further illustrated, extruding can include applying a force 180 (such as a pressure) on the mixture 101 to facilitate extruding the mixture 101 through the die opening 105. During extrusion within an application zone 183, a production tool 151 can be in direct contact with a portion of a belt 109. The screen printing process can include extruding the mixture 101 from the die 103 through the die opening 105 in a direction 191. In particular, the screen printing process may utilize the production tool 151 such that, upon extruding the mixture 101 through the die opening 105, the mixture 101 can be forced into an opening 152 in the production tool 151.

In accordance with an embodiment, a particular pressure may be utilized during extrusion. For example, the pressure can be at least about 10 kPa, such as at least about 500 kPa. Still, in at least one non-limiting embodiment, the pressure utilized during extrusion can be not greater than about 4 MPa. It will be appreciated that the pressure used to extrude the mixture 101 can be within a range between any of the minimum and maximum values noted above. In particular instances, the consistency of the pressure delivered by a piston 199 may facilitate improved processing and formation of shaped abrasive particles. Notably, controlled delivery of consistent pressure across the mixture 101 and across the width of the die 103 can facilitate improved processing control and improved dimensional characteristics of the shaped abrasive particles.

Referring briefly to FIG. 1B, a portion of the production tool (e.g., a screen) 151 is illustrated. As shown, the production tool 151 can include the opening 152, and more particularly, a plurality of openings 152 extending through the volume of the production tool 151. In accordance with an embodiment, the openings 152 can have a two-dimensional shape as viewed in a plane defined by the length (L) and width (W) of the screen. As illustrated in FIG. 1B, the openings 152 have generally cross-shaped two-dimensional shapes. However, it will be appreciated that the production tool 151 can have openings 152 including other two-dimensional shapes, including but not limited to polygons, ellipsoids, numerals, Greek alphabet letters, Latin alphabet letters, Russian alphabet characters, complex shapes including a combination of polygonal shapes, and a combination thereof. In particular instances, the openings 152 may have two-dimensional polygonal shapes such as a triangle, a rectangle, a quadrilateral, a pentagon, a hexagon, a heptagon, an octagon, a nonagon, a decagon, and a combination thereof.

As illustrated and in accordance with one embodiment, each of the openings 152 can have substantially the same orientation relative to each other, and substantially the same orientation relative to the surface of the production tool 151. Still, it will be appreciated that the openings 152 may not necessarily be arranged in rows. The openings 152 may be arranged in various particular ordered distributions with respect to each other on the production tool 151, such as in the form of a two-dimensional pattern. Alternatively, the openings may be disposed in a random manner on the production tool 151.

Referring again to FIG. 1A, after forcing the mixture 101 through the die opening 105 and a portion of the mixture 101 through the openings 152 in the production tool 151, one or more precursor shaped abrasive particles 123 may be printed on the belt 109 disposed under the production tool 151. According to a particular embodiment, the precursor shaped abrasive particles 123 can have a shape substantially replicating the shape of the openings 152. Notably, the mixture 101 can be forced through the production tool 151 in rapid fashion, such that the average residence time of the mixture 101 within the openings 152 can be less than about 2 minutes, less than about 1 minute, less than about 40 seconds, or even less than about 20 seconds. In particular non-limiting embodiments, the mixture 101 may be substantially unaltered during printing as it travels through the screen openings 152, thus experiencing no change in the amount of components from the original mixture, and may experience no appreciable drying in the openings 152 of the production tool 151.

Additionally, the system 151 can include a bottom stage 198 within the application zone 183. During the process of forming shaped abrasive particles, the belt 109 can travel over the bottom stage 198, which can offer a suitable substrate for forming.

During operation of the system 150, the production tool 151 can be translated in a direction 153 while the belt 109 can be translated in a direction 110 substantially similar to the direction 153, at least within the application zone 183, to facilitate a continuous printing operation. As such, the precursor shaped abrasive particles 123 may be printed onto the belt 109 and translated along the belt 109 to undergo further processing. It will be appreciated that such further processing includes drying, and may include processes described in the embodiments herein, including for example, shaping, application of other materials (e.g., dopant material), and the like.

In some embodiments, the belt 109 and/or the production tool 151 can be translated while extruding the mixture 101 through the die opening 105. As illustrated in the system 100, the mixture 101 may be extruded in a direction 191. The direction of translation 110 of the belt 109 and/or the production tool 151 can be angled relative to the direction of extrusion 191 of the mixture 101. While the angle between the direction of translation 110 and the direction of extrusion 191 is illustrated as substantially orthogonal in the system 100, other angles are contemplated, including for example, an acute angle or an obtuse angle.

The belt 109 and/or the production tool 151 may be translated at a particular rate to facilitate processing. For example, the belt 109 and/or the production tool 151 may be translated at a rate of at least about 3 cm/s. In other embodiments, the rate of translation of the belt 109 and/or the production tool 151 may be greater, such as at least about 4 cm/s, at least about 6 cm/s, at least about 8 cm/s, or even at least about 10 cm/s. Still, in at least one non-limiting embodiment, the belt 109 and/or the production tool 151 may be translated in a direction 110 at a rate of not greater than about 5 m/s, not greater than about 1 m/s, or even not greater than about 0.5 m/s. It will be appreciated that the belt 109 and/or the production tool 151 may be translated at a rate within a range between any of the minimum and maximum values noted above, and moreover, may be translated at substantially the same rate relative to each other. Furthermore, for certain processes according to embodiments herein, the rate of translation of the belt 109 as compared to the rate of extrusion of the mixture 101 in the direction 191 may be controlled to facilitate proper processing.

After the mixture 101 is extruded through the die opening 105, the mixture 101 may be translated along the belt 109 under a knife edge 107 attached to a surface of the die 103. The knife edge 107 may define a region at the front of the die 103 that facilitates displacement of the mixture 101 into the openings 152 of the production tool 151.

Certain processing parameters may be controlled to facilitate formation of particular features of the precursor shaped abrasive particles 123 and the finally-formed shaped abrasive particle fractions described herein. Some exemplary process parameters that can be controlled include a release distance 197, a viscosity of the mixture, a storage modulus of the mixture, mechanical properties of the bottom stage, geometric or dimensional characteristics of the bottom stage, thickness of the production tool, rigidity of the production tool, a solid content of the mixture, a carrier content of the mixture, a release angle, a translation speed, a temperature, a content of release agent, a pressure exerted on the mixture, a speed of the belt, a drying rate, a drying time, a drying temperature, and a combination thereof.

According to one embodiment, one particular process parameter can include controlling the release distance 197 between a filling position and a release position. In particular, the release distance 197 can be a distance measured in a direction 110 of the translation of the belt 109 between the end of the die 103 and the initial point of separation between the production tool 151 and the belt 109.

After extruding the mixture 101 into the openings 152 of the production tool 151, the belt 109 and the production tool 151 may be translated to a release zone 185 where the belt 109 and the production tool 151 can be separated to facilitate the formation of the precursor shaped abrasive particles 123. In accordance with an embodiment, the production tool 151 and the belt 109 may be separated from each other within the release zone 185 at a particular release angle.

Thereafter, the precursor shaped abrasive particles 123 may be translated through a series of zones wherein various treating processes may be conducted. Some suitable exemplary treating processes can include drying, heating, curing, reacting, radiating, mixing, stirring, agitating, planarizing, calcining, sintering, comminuting, sieving, doping, and a combination thereof. According to one embodiment, the precursor shaped abrasive particles 123 may be translated through an optional shaping zone 113, wherein at least one exterior surface of the particles may be shaped as described in embodiments herein. Furthermore, the precursor shaped abrasive particles 123 may be translated through an optional application zone 131, wherein a dopant material can be applied to at least one exterior surface of the particles by application heads 132.

After forming precursor shaped abrasive particles 123, the particles are translated through a post-forming zone 125. The post-forming zone 125 includes processing the precursor shaped abrasive particles and fracturing the precursor shaped abrasive particles substantially along their predetermined stress concentration vector to form fractured shaped abrasive particles, which are referred to as shaped abrasive particle fractions.

The processing in the post-forming zone 125 includes drying. Drying is conducted after removing the mixture 101 from the openings 152, such that the precursor shaped abrasive particles 123 are formed with substantially the same moisture content in the mixture 101 as present during the extrusion process. Notably, removing the mixture 101 from the openings 152 is completed prior to complete drying of the mixture 101 in the openings 152 of the production tool 151.

Drying includes controlling a drying operation to fracture the precursor shaped abrasive particles along the at least one predetermined stress concentration vector to form a plurality of shaped abrasive particle fractions.

In at least one embodiment, drying may be conducted at a drying temperature of not greater than about 300°C, such as not greater than about 280°C, or even not greater than about 250°C. Still, in one non-limiting embodiment, the drying process may be conducted at a drying temperature of at least about 50°C. It will be appreciated that the drying temperature may be within a range between any of the minimum and maximum temperatures noted above. For example, in at least one embodiment, the precursor shaped abrasive particles can be dried at approximately 50°C-80°C to induce intentional fracturing at a predetermined stress concentration point and along a predetermined stress concentration vector. Furthermore, the precursor shaped abrasive particles 123 may be translated through the post-forming zone 125 at a particular rate, such as at least about 0.2 feet/min and not greater than about 8 feet/min to control the residence time of the particles in the drying process.

Furthermore, the drying process may be conducted for a particular duration. For example, the drying process may be not greater than about six hours, such as not greater than about 5 hours, not greater than about 4 hours, not greater than about 2 hours, or even not greater than about 1 hour. Still, the drying process may be at least about 1 min, such as at least about 2 minutes. It will be appreciated that the drying duration may be within a range between any of the minimum and maximum temperatures noted above. For example, in at least one embodiment, the precursor shaped abrasive particles can be dried for a duration of 1 to 10 minutes, which may facilitate intentional fracturing at a predetermined stress concentration point and along a predetermined stress concentration vector.

After the precursor shaped abrasive particles 123 are translated through the post-forming zone 125, the shaped abrasive particle fractions may be removed from the belt 109 and collected in a bin 127 for further processing.

The process of forming shaped abrasive particle fractions may further comprise a sintering process. Sintering of the shaped abrasive particle fractions may be utilized to densify the particles, which are generally in a green state. In a particular instance, the sintering process can facilitate the formation of a high-temperature phase of the ceramic material. For example, in one embodiment, the precursor shaped abrasive particles 123 may be sintered such that a high-temperature phase of alumina, such as alpha alumina, is formed. In one instance, a shaped abrasive particle can comprise at least about 90 wt% alpha alumina for the total weight of the particle. In other instances, the content of alpha alumina may be greater such that the shaped abrasive particle may consist essentially of alpha alumina.

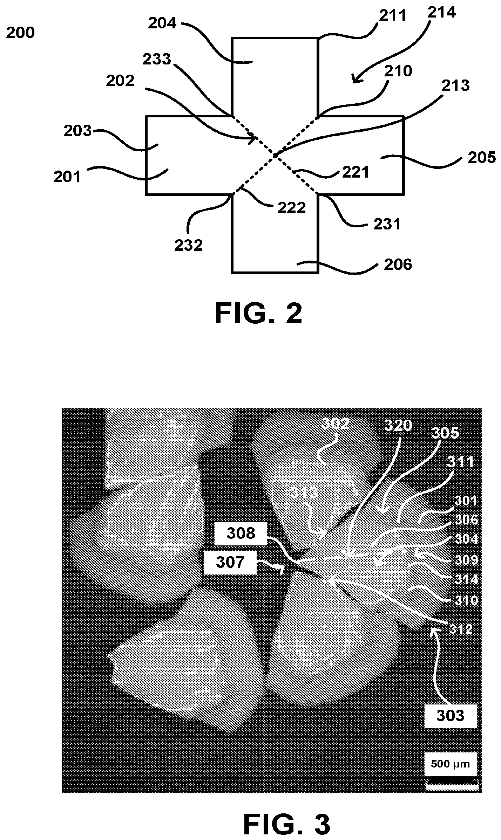

FIG. 2 includes a top down view of an illustration of a precursor shaped abrasive particle according to an embodiment. As illustrated, the precursor shaped abrasive particle 200 has a body 201 having a polygonal two-dimensional shape. The precursor shaped abrasive particle 200 comprises a two-dimensional shape as viewed top down having at least one internal corner 210 and one external corner 211. Notably, the internal corner is closer to the midpoint 213 of the body than the external corner. The body 201 includes at least one concave portion 214. The concave portion 214 includes an internal corner 210. In other instances, the concave portion 214 can define a portion of the periphery of the body that extends inward from two points and defines a portion of the periphery that is closer to the midpoint 213 relative to the two points.

More particularly, the body 201 can have a cross-shaped two-dimensional shape having at least one arm extending from a central portion 202 of the body 201. According to the illustrated embodiment, the body 201 includes a central portion 202, a first arm 203 extending from the central portion 202, a second arm 204 extending from the central portion 202, a third arm 205 extending from the central portion 202, and a fourth arm 206 extending from the central portion 202. The central portion can include the midpoint 213 of the body 201.

It will be appreciated that while the illustrated embodiment of FIG. 2 demonstrates a generally cross-shaped two-dimensional shape, other shapes are contemplated including for example, but not limited to, a star shape, a Y-shape, a quadrilateral, a pentagon, a hexagon, a heptagon, an octagon, a nonagon, a decagon, and a combination thereof.

The body 201 is formed such that it includes at least one predetermined stress concentration point, such as point 231. For the body 201, the internal corners 210, 231, 232, and 233 may each define a predetermined stress concentration point of the body 201. Furthermore, the body 201 includes at least one predetermined stress concentration vector, such as the predetermined stress concentration vector 221. In the illustrated embodiment of FIG. 2, the body 201 includes a first predetermined stress concentration vector 221 and a second predetermined stress concentration vector 222. The first predetermined stress concentration vector 221 and the second predetermined stress concentration vector 222 can intersect each other in the central portion 202 of the body 201, and more particularly, can extend through the midpoint 213 of the body. In a particular instance, the first predetermined stress concentration vector 221 and the second predetermined stress concentration vector 222 can intersect each other proximate to the midpoint 213 of the body. The predetermined stress concentration points and vectors can be engineered by controlling the two-dimensional shape of the body 201.

The predetermined stress concentration points may be controlled by modifying one or more factors including the shape of the mold, the shape of the precursor shaped abrasive particles, processing conditions (e.g., drying conditions), localized treatments by additives, mechanical manipulation, and a combination thereof. The predetermined stress concentration point creates a region of stress within the body of the precursor shaped abrasive particle. According to one embodiment, a localized treatment can include a hydrophobic treatment of a portion of the surface of the precursor shaped abrasive particle. In yet another embodiment, a predetermined stress concentration point may be created in the precursor shaped abrasive particle by heterogeneities in the microstructure. Moreover, the predetermined stress concentration vector defines the most probable crack propagation path orthogonal to the lines of maximum principle stress in the body of the precursor shaped abrasive particle. The predetermined stress concentration vector can be controlled by one or more factors including the shape of the mold, the shape of the precursor shaped abrasive particles, processing conditions (e.g., drying conditions), localized treatments by additives, mechanical manipulation, and a combination thereof.

According to an embodiment, the shape of the precursor shaped abrasive particles and the forming process are controlled relative to each other to facilitate fracturing of the precursor shaped abrasive particles in a controlled manner. The shape of the precursor shaped abrasive particle, which is related to the shape of the openings 152 in the production tool 151 can be tailored with the forming process, including the drying process, such that the one or more predetermined stress concentration points and the one or more predetermined stress concentration vectors define a likely propagation path of a crack through the body 201. The drying operation can be tailored to facilitate initial fracturing of the precursor shaped abrasive particles at the one or more predetermined stress concentration points. The initial cracks are then likely to propagate along the one or more predetermined stress concentration vectors. It will be appreciated that the precursor shaped abrasive particles can have a different two-dimensional shape that would also facilitate the formation of a predetermined stress concentration point and a predetermined stress concentration vector.

The process can be controlled to ensure suitable fracturing of the precursor shaped abrasive particles. For example, at least a majority, such as at least about 65%, at least about 75% or even at least about 95% of the precursor shaped abrasive particles are fractured during processing to create shaped abrasive particle fractions. Moreover, at least a majority, such as at least about 65%, at least about 75% or even at least about 95% of the precursor shaped abrasive particles are fractured in the same manner relative to each other, such that the shaped abrasive particle fractions have substantially the same shape.

FIG. 3 includes an image of shaped abrasive particle fraction according to the invention. As can be seen in the image of FIG. 3, fracturing includes forming at least a first shaped abrasive particle 301 fraction and a second shaped abrasive particle fraction 302. According to one embodiment, the first and second shaped abrasive particle fractions 301 and 302 have a substantially similar shape relative to each other.

The first shaped abrasive particle fraction 301 has a bottom surface 303, an upper surface 304, and a side surface 305 extending between the bottom surface 303 and the upper surface 304. The upper surface defines a shovel shape including a concave surface 306 having a tip region 307 including at least one tip corner 308. The body 301 further includes at least one rear region 309 defining at least one rear corner 310. The tip corner 308 has a tip sharpness that is greater than a tip sharpness of the at least one rear corner 310. Moreover, the rear region 309 of the body 301 has a first rear corner 310 and a second rear corner 311, and wherein the tip corner 308 can have a tip sharpness that is greater than a tip sharpness of the first rear corner 310 and the second rear corner 311.

In certain embodiments, the tip corner 308 can have a tip sharpness that is at least about 50% sharper than the tip sharpness of the first rear corner 310 or the second rear corner 311. The percentage difference in tip sharpness can be calculated according to the formula [(Tc1-Tc2)/Tc1]x100%, where Tc1 is the tip having the greater radius of curvature values, which defines the tip sharpness, and Tc2 is the smaller radius of curvature value. The tip sharpness can be a measure of the radius of curvature of the tip, with a lower radius representing a sharper tip. The tip radius can be measured using image analysis such as a Clemex Image Analysis program or ImageJ interfaced with an inverted light microscope or other suitable image analysis software. The radius of curvature for each triangular apex can be estimated by defining three points at each apex when viewed in cross section at 100× magnification. A point is placed at the start of the tip's curve where there is a transition from the straight edge to the start of a curve, at the apex of the tip, and at the transition from the curved tip back to a straight edge. The image analysis software then draws an arc defined by the three points (start, middle, and end of the curve) and calculates a radius of curvature. The radius of curvature for at least 30 apexes are measured and averaged to determine the average tip radius. In another embodiment, the tip corner 308 can have a tip sharpness that is at least about 60% sharper (i.e., a radius of curvature value that is 60% less) than the tip sharpness of the first rear corner 310 or the second rear corner 311, such as 70% sharper, 80% sharper, or even at least 90% sharper. Still, in one non-limiting embodiment, it may be not greater than about 99% sharper or not greater than about 95% sharper.

In an embodiment, the tip corner 308 can have a tip sharpness that is not greater than about 50 microns, wherein 50 microns is the measure of the radius of curvature of the tip corner 308. In still other instances, the tip corner 308 can have a tip sharpness of not greater than about 40 microns, not greater than about 30 microns, not greater than about 20 microns, or even not greater than about 15 microns. Still, the tip corner 308 can have a tip sharpness of at least about 0.1 microns or at least about 1 micron. It will be appreciated that the tip corner 308 can have a tip sharpness within a range including any of the minimum and maximum values noted above. Furthermore, it will be appreciated that reference herein to any value of tip sharpness can be reference to an average value taken from a suitable sample size of shaped abrasive particle fractions. It is believed that a sharper tip can promote more aggressive cutting and an improved fracturing of the shaped abrasive particles during use, especially when combined with the shape of the shaped abrasive particle fractions, including the upper surfaces having the shovel shape.

In an embodiment, the first or second rear corner 310 or 311 can have a tip sharpness that is at least about 50 microns, wherein 50 microns is the measure of the radius of curvature of the tip corner 308. In still other instances, the first or second rear corner 310 or 311 can have a tip sharpness of at least about 60 microns, at least about 80 microns, at least about 100 microns, at least about 125 microns, or even at least about 150 microns. Still, the first or second rear corner 310 or 311 can have a tip sharpness of not greater than about 500 microns or even not greater than about 200 microns. It will be appreciated that the first or second rear corner 310 or 311 can have a tip sharpness within a range including any of the minimum and maximum values noted above.

In another instance, the bottom surface 303 can have a rounded contour. More particularly, the side surface 305 can exhibit some flashing or tapering from the upper surface 304 to the bottom surface 303, such that the bottom surface 303 is flared out providing a wide base for the body 301. For example, the shape of the shaped abrasive particle fractions may facilitate placement of the shaped abrasive particle fractions in a position to present the tip corner 308 in a cutting position (i.e., in a position pointing away from the backing) and the base (e.g., the side surface 305 or the rear region 309) closest to the backing with a larger surface area to secure the particles in the adhesives.

The upper surface 304 includes a first upper edge 312 and a second upper edge 313. The first upper edge 312 and second upper edge 313 define a portion of the shovel shape and intersect at the tip region 307. In particular instances, the first upper edge 312 and second upper edge 313 defining fractured edges.

As further illustrated in the shaped abrasive particle fractions of FIG. 3, the rear region 309 has at least one rear edge 314 joining the upper surface 304 and the side surface 305. The rear edge 314 has an edge sharpness less than a sharpness of the first upper edge 312 or second upper edge 313. The rear edge 314 can define an unfractured edge. Moreover, the rear edge 314 has a more rounded contour in comparison to the first upper edge 312 or second upper edge 313.

Finally, as illustrated, in FIG. 3 the shaped abrasive particle fractions have an upper surface 304 that has a shovel shape. That is, the upper surface 304 can have a depression or concave contour, wherein the first upper edge 312 and second upper edge 313 can define regions of the greatest height on the particle as viewed from the side, while points along the axis 320 of the upper surface may be in the center of the depression or concavity and define regions on the upper surface that are lower in height relative to certain points on the first upper edge 312 or second upper edge 313. Moreover, in certain instances, at least one of the rear corners 310 or 311 and the tip corner 308 are located on the concave surface and at least one of the rear corners 310 or 311 is located at a higher position on the concave surface relative to the tip corner 308. Without wishing to be tied to a particular theory, such features may enable greater abrasive capabilities by the formation of sharper corners and surfaces than are feasible using conventional shaping processes (e.g., molding).

The shaped abrasive particle fractions obtained through the process of the embodiments herein can have very sharp tips where the intentional cracking occurred and may contain corners that are less sharp along other portions of the perimeter, such as those portions corresponding to the position of outward pointing angles of the opening in the production tool 151.

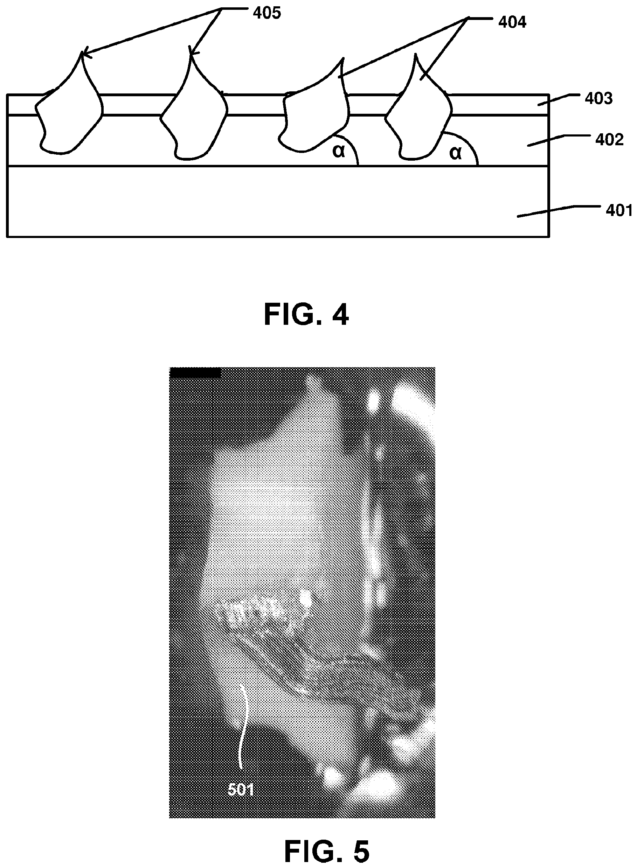

For example, as illustrated in FIG. 4, the shaped abrasive particles 404 (e.g., the shaped abrasive particle fractions) may be incorporated in a coated abrasive article such that the sharp tips 405 are pointing away from the substrate 401 and the larger more curved base of the shaped abrasive particles 404 are bonded to the make coat 402 and/or size coat 403 of the abrasive article.

It will be appreciated that various methods may be used in the art to control the deployment of the shaped abrasive particles (e.g., the shaped abrasive particle fractions) in coated abrasive articles. For example, the shaped abrasive particles 404 may be deposited in a controlled distribution (e.g., a pattern) on the surface of the substrate 401, such that the placement of the shaped abrasive particles relative to each other and relative to a position on the substrate 401 is controlled. Moreover, the orientation of the shaped abrasive particles 404 on the backing may be controlled, such that the sharp tips 405 are pointing away from the substrate 401. Controlled orientation may also include control of the proper tilt angle (α) of the shaped abrasive particles relative to the substrate 401. Various methods may be used to achieve controlled distribution and orientation, including electrostatic deposition methods. It will also be appreciated that the shaped abrasive particles herein may be combined with one or more types of other shaped abrasive particles or diluent particles, which may include conventional abrasive particles.

It will be appreciated that the shaped abrasive particle fractions can be incorporated into other fixed abrasive articles, such as bonded abrasives, non-woven abrasives, thin wheels, grinding wheels, reinforced abrasives, and the like. **In** the alternative, the shaped abrasive particle fractions of the embodiments herein may be used in slurries as free abrasive particles.

### Example

A gel was formed including 35-40 wt % boehmite commercially available as Catapal B and seeded with 1% alpha alumina seeds. The mixture also included water, 2.5 wt% nitric acid, and organic material. The mixture was extruded through a die opening under a pressure of 8-10 psi and into cross-shaped openings of the production tool provided in FIG. 1B with dimensions of 4 mm in total length, 1 mm for a length of an arm, and 0.6 mm for the depth of the openings.

The production tool was made of metal and had a non-stick polymer coating (e.g., PTFE) on the interior surfaces of the openings. The production tool and belt were moved at a rate of approximately 10 m/min. The production tool was removed before any appreciable drying of the gel and precursor shaped abrasive particles were formed on the belt. The precursor shaped abrasive particles were dried at approximately 50°C-80°C for 4-7 minutes to induce intentional fracturing at predetermined stress concentration points and along predetermined stress concentration vectors. After drying and fracturing, the resulting shaped abrasive particles (e.g., the shaped abrasive particle fractions) formed from the precursor shaped abrasive particle were sintered at approximately 1300°C for approximately 10 minutes to achieve 98% theoretical density.

FIG. 3 includes images of shaped abrasive particle fractions formed according to Example. 1. The average tip sharpness for the tip corners (e.g., tip corner 308) of the shaped abrasive particle fractions was approximately 19.2 microns.

The shaped abrasive particle fractions were tested according to a single grit grinding test (SGGT) in a side orientation. In conducting the SGGT, one single shaped abrasive particle is held in a grit holder by a bonding material of epoxy. The shaped abrasive particle is secured in a side orientation and moved across a workpiece of 304 stainless steel for a scratch length of 8 inches using a wheel speed of 22 m/s and an initial scratch depth of 10 microns. The shaped abrasive particle produces a groove in the workpiece having a cross-sectional area (AR). For each sample set, each shaped abrasive particle completes 5 passes across the 8 inch length, 10 individual particles are tested for each of the orientation and the results are analyzed. The test measures the tangential force exerted by the grit on the workpiece, in the direction that is parallel to the surface of the workpiece and the direction of the groove, and the net change in the cross-sectional area of the groove from beginning to the end of the scratch length is measured to determine the shaped abrasive particle wear. The net change in the cross-sectional area of the groove for each pass can be measured. For the SGGT, the net cross-sectional area of the groove is defined as the difference between the cross-sectional area of the groove below the surface and the cross sectional area of the material displaced above the surface. Performance (Ft/A) is defined as the ratio of the tangential force to the net cross-sectional area of the groove.

The SGGT was conducted with a sample set of shaped abrasive particle fractions formed according to this Example and positioned in a side surface orientation as depicted in FIG. 5, wherein a side surface 501 of each shaped abrasive particle fraction is oriented perpendicular to the grinding direction such that the side surface 501 initiates grinding of the workpiece. The results of the SGGT test using the sample set of shaped abrasive particle fractions in a side orientation allows for measurement of the grinding efficiency of the particle fractions in a side orientation.

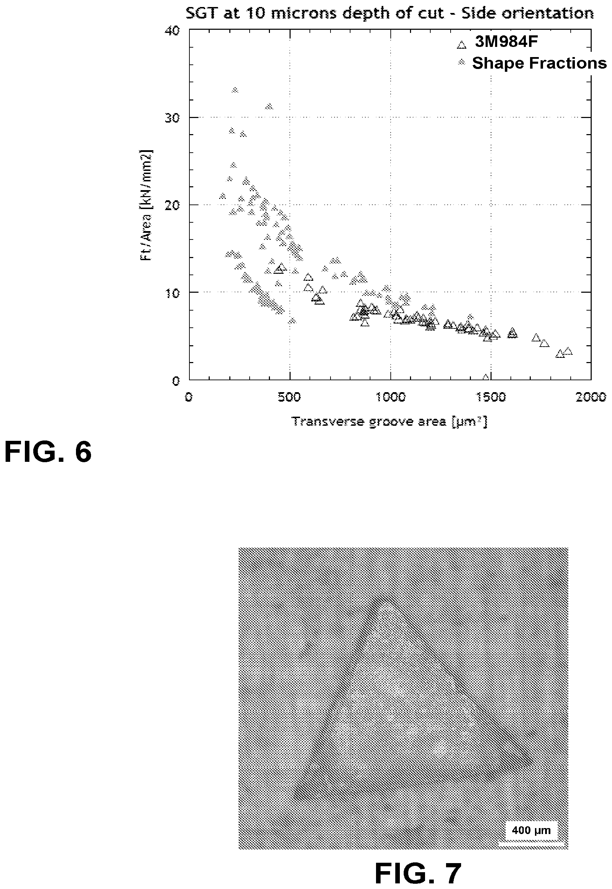

FIG. 6 includes a plot of tangential force divided by groove area (as a proxy for specific grinding energy) as a function of groove area, wherein for a given groove area, the lower the tangential force, the better the performance of the particle or particle fraction. The shaped abrasive particle fractions of Example 1 were compared against triangular shaped abrasive particles commercially available as 3M984F from 3M Corporation, one of which is illustrated in FIG. 7 (i.e., the conventional sample). As demonstrated by the plot of FIG. 6, some of the shaped abrasive particle fractions appeared to have the same or better performance relative to the shaped abrasive particles of the conventional sample. Notably, at lower transverse groove area the tangential force per area was lower, indicating a lower specific grinding energy and more efficient initial grinding by the shaped abrasive particle fractions as compared to the conventional shaped abrasive particles.

## Claims

1. A method of forming a shaped abrasive particle fraction (301, 302) comprising:
forming a precursor shaped abrasive particle (200) having a body (201) including at least one predetermined stress concentration point (231) creating a region of stress within the body (201) of the precursor shaped abrasive particle (200) and at least one predetermined stress concentration vector defining the most probable crack propagation path orthogonal to the lines of maximum principle stress in the body (201) of the precursor shaped abrasive particle (200); and
processing the precursor shaped abrasive particle (200) and fracturing the precursor shaped abrasive particle (200) substantially along the predetermined stress concentration vector (221) to form a first shaped abrasive particle fraction (301) comprising a bottom surface (303), an upper surface (304), and a side surface (305) extending between the bottom surface (303) and the upper surface (304),
wherein forming comprises depositing a mixture (101) into an opening (152) of a production tool (151) and forming the precursor shaped abrasive particle (200), and wherein forming further comprises removing the mixture (101) from the opening (152) prior to complete drying of the mixture (101) in the opening (152), and
wherein processing includes controlling a drying operation to fracture the precursor shaped abrasive particles (200) along the at least one predetermined stress concentration vector (221) to form a plurality of shaped abrasive particle fractions (301, 302),
wherein the precursor shaped abrasive particle (200) comprises a two-dimensional shape as viewed top down having at least one internal corner (210) and one external corner (211), wherein the internal corner (210) is closer to a midpoint (213) of the body (201) than the external corner (211),
wherein the at least one internal corner (210) defines a predetermined stress concentration point of the body (201),
wherein the body (201) comprises at least one concave (214) portion defining an internal corner (210),
wherein the mixture (101) includes a gel formed of a ceramic powder material and a liquid,
wherein the gel is a shape-stable material having the ability to substantially hold a given shape even in the green state.

2. The method of claim 1, wherein the predetermined stress concentration vector (221) extends through a midpoint (213) of the body (201).

3. The method of claim 1, wherein the precursor shaped abrasive particle (200) comprises a first predetermined stress concentration vector (221) and a second predetermined stress concentration vector (222) and wherein the first predetermined stress concentration vector (221) and the second predetermined stress concentration vector (222) intersect each other.

4. The method of claim 1, wherein fracturing includes forming at least a first shaped abrasive particle fraction (301) and a second shaped abrasive particle fraction (302).

5. The method of claim 1, and wherein the upper surface (304) defines a shovel shape including a concave surface (306) having a tip region (307) including at least one tip corner (308) and at least one rear region (309) defining at least one rear corner (310).

6. The method of claim 5, wherein the tip corner (308) has a tip sharpness that is greater than a tip sharpness of the at least one rear corner (310).

7. A shaped abrasive particle fraction (301, 302) comprising a body (301) including a bottom surface (303), an upper surface (304), and a side surface (305) extending between the bottom surface (303) and the upper surface (304), wherein the upper surface (304) defines a shovel shape including a concave surface (306) having a tip region (307) including at least one tip corner (308) and at least one rear region (309) defining at least one rear corner (310), wherein the at least one tip corner (308) has a tip sharpness that is greater than a tip sharpness of the at least one rear corner (310),
wherein the upper surface (304) comprises a first upper edge (312) and a second upper edge (313), wherein the first upper edge (312) and second upper edge (313) define a portion of the shovel shape and intersect at the tip region (307),
wherein the rear region (309) defines at least one rear edge (314) joining the upper surface (304) and the side surface (305), and wherein the rear edge (314) has an edge sharpness less than a sharpness of the first upper edge (312) or second upper edge (313), and further wherein the at least one rear edge (314) has a more rounded contour in comparison to the first upper edge (312) and the second upper edge (313).

8. The shaped abrasive particle fraction (301, 302) of claim 7, wherein the at least one tip corner (308) has a tip sharpness that is at least about 50% sharper than the tip sharpness of the at least one rear corner (310).

9. The shaped abrasive particle fraction (301, 302) of claim 7, wherein the bottom surface (303) comprises a rounded contour.

10. The shaped abrasive particle fraction (301, 302) of claim 7, wherein the at least one rear corner (310) and the at least one tip corner (308) are located on the concave surface (306) and the at least one rear corner (310) is located at a higher position on the concave surface (306) relative to the at least one tip corner (308).

## Patentansprüche

1. Verfahren zum Bilden einer geformten Schleifpartikelfraktion (301, 302), umfassend:
Bilden eines geformten Vorläufer-Schleifpartikels (200), das einen Körper (201), einschließlich mindestens eines zuvor bestimmten Spannungskonzentrationspunkts (231), der einen Spannungsbereich innerhalb des Körpers (201) des geformten Vorläufer-Schleifpartikels (200) erzeugt, und mindestens eines zuvor bestimmten Spannungskonzentrationsvektors, der den wahrscheinlichsten Rissausbreitungspfad orthogonal zu den Linien einer maximalen Hauptspannung in dem Körper (201) des geformten Vorläufer-Schleifpartikels (200) definiert, aufweist; und
Verarbeiten des geformten Vorläufer-Schleifpartikels (200) und Brechen des geformten Vorläufer-Schleifpartikels (200) im Wesentlichen entlang des zuvor bestimmten Spannungskonzentrationsvektors (221), um eine erste geformte Schleifpartikelfraktion (301), umfassend eine untere Oberfläche (303), eine obere Oberfläche (304) und eine Seitenoberfläche (305), die sich zwischen der unteren Oberfläche (303) und der oberen Oberfläche (304) erstreckt, zu bilden,
wobei das Bilden ein Abscheiden einer Mischung (101) in eine Öffnung (152) eines Produktionswerkzeugs (151) und das Bilden des geformten Vorläufer-Schleifpartikels (200) umfasst, und wobei das Bilden ferner ein Entfernen der Mischung (101) aus der Öffnung (152) vor einem vollständigen Trocknen der Mischung (101) in der Öffnung (152) umfasst, und
wobei das Verarbeiten ein Steuern eines Trocknungsvorgangs einschließt, um die geformten Vorläufer-Schleifpartikel (200) entlang des mindestens einen zuvor bestimmten Spannungskonzentrationsvektors (221) zu brechen, um eine Vielzahl von geformten Schleifpartikelfraktionen (301, 302) zu bilden,
wobei das geformte Vorläufer-Schleifpartikel (200) eine zweidimensionale Form, wenn von oben nach unten betrachtet, umfasst, wobei es mindestens eine innere Ecke (210) und eine äußere Ecke (211) aufweist, wobei die innere Ecke (210) näher an einem Mittelpunkt (213) des Körpers (201) als die äußere Ecke (211) liegt,
wobei die mindestens eine innere Ecke (210) einen zuvor bestimmten Spannungskonzentrationspunkt des Körpers (201) definiert,
wobei der Körper (201) mindestens einen konkaven (214) Abschnitt, der eine innere Ecke (210) definiert, umfasst,
wobei die Mischung (101) ein Gel, das aus einem keramischen Pulvermaterial und einer Flüssigkeit gebildet ist, einschließt,
wobei das Gel ein formstabiles Material, das die Fähigkeit aufweist, eine gegebene Form selbst in dem Grünzustand im Wesentlichen beizubehalten, ist.

2. Verfahren nach Anspruch 1, wobei sich der zuvor bestimmte Spannungskonzentrationsvektor (221) durch einen Mittelpunkt (213) des Körpers (201) erstreckt.

3. Verfahren nach Anspruch 1, wobei das geformte Vorläufer-Schleifpartikel (200) einen ersten zuvor bestimmten Spannungskonzentrationsvektor (221) und einen zweiten zuvor bestimmten Spannungskonzentrationsvektor (222) umfasst, und wobei der erste zuvor bestimmte Spannungskonzentrationsvektor (221) und der zweite zuvor bestimmte Spannungskonzentrationsvektor (222) einander schneiden.

4. Verfahren nach Anspruch 1, wobei das Brechen das Bilden mindestens einer ersten geformten Schleifpartikelfraktion (301) und einer zweiten geformten Schleifpartikelfraktion (302) einschließt.

5. Verfahren nach Anspruch 1, und wobei die obere Oberfläche (304) eine Schaufelform definiert, einschließlich einer konkaven Oberfläche (306), die einen Spitzenbereich (307), einschließlich mindestens einer Spitzenecke (308), und mindestens einen hinteren Bereich (309), der mindestens eine hintere Ecke (310) definiert, aufweist.

6. Verfahren nach Anspruch 5, wobei die Spitzenecke (308) eine Spitzenschärfe, die größer als eine Spitzenschärfe der mindestens einen hinteren Ecke (310) ist, aufweist.

7. Geformte Schleifpartikelfraktion (301, 302), umfassend einen Körper (301), einschließlich einer unteren Oberfläche (303), einer oberen Oberfläche (304) und einer Seitenoberfläche (305), die sich zwischen der unteren Oberfläche (303) und der oberen Oberfläche (304) erstreckt, wobei die obere Oberfläche (304) eine Schaufelform definiert, einschließlich einer konkaven Oberfläche (306), die einen Spitzenbereich (307), einschließlich mindestens einer Spitzenecke (308), und mindestens einen hinteren Bereich (309), der mindestens eine hintere Ecke (310) definiert, aufweist, wobei die mindestens eine Spitzenecke (308) eine Spitzenschärfe, die größer als eine Spitzenschärfe der mindestens einen hinteren Ecke (310) ist, aufweist,
wobei die obere Oberfläche (304) eine erste Oberkante (312) und eine zweite Oberkante (313) umfasst, wobei die erste Oberkante (312) und die zweite Oberkante (313) einen Abschnitt der Schaufelform definieren und sich an dem Spitzenbereich (307) schneiden,
wobei der hintere Bereich (309) mindestens eine Hinterkante (314), die die obere Oberfläche (304) und die Seitenoberfläche (305) verbindet, definiert, und wobei die Hinterkante (314) eine Kantenschärfe, die geringer als eine Schärfe der ersten Oberkante (312) oder der zweiten Oberkante (313) ist, aufweist, und ferner wobei die mindestens eine Hinterkante (314) im Vergleich zu der ersten Oberkante (312) und der zweiten Oberkante (313) eine abgerundetere Kontur aufweist.

8. Geformte Schleifpartikelfraktion (301, 302) nach Anspruch 7, wobei die mindestens eine Spitzenecke (308) eine Spitzenschärfe, die mindestens etwa 50 % schärfer als die Spitzenschärfe der mindestens einen hinteren Ecke (310) ist, aufweist.

9. Geformte Schleifpartikelfraktion (301, 302) nach Anspruch 7, wobei die untere Oberfläche (303) eine abgerundete Kontur umfasst.

10. Geformte Schleifpartikelfraktion (301, 302) nach Anspruch 7, wobei sich die mindestens eine hintere Ecke (310) und die mindestens eine Spitzenecke (308) auf der konkaven Oberfläche (306) befinden und sich die mindestens eine hintere Ecke (310) an einer höheren Position auf der konkaven Oberfläche (306) relativ zu der mindestens einen Spitzenecke (308) befindet.

## Revendications

1. Procédé de formation d'une fraction de particule abrasive façonnée (301, 302) comprenant :
la formation d'une particule abrasive façonnée de précurseur (200) ayant un corps (201) qui comporte au moins un point de concentration de contrainte prédéterminé (231) créant une région de contrainte à l'intérieur du corps (201) de la particule abrasive façonnée de précurseur (200) et au moins un vecteur de concentration de contrainte prédéterminé définissant le trajet de propagation de fissures le plus probable orthogonal aux lignes de contrainte principale maximale dans le corps (201) de la particule abrasive façonnée de précurseur (200) ; et
le traitement de la particule abrasive façonnée de précurseur (200) et la fracturation de la particule abrasive façonnée de précurseur (200) sensiblement le long du vecteur de concentration de contrainte prédéterminé (221) afin de former une première fraction de particule abrasive façonnée (301) qui comprend une surface inférieure (303), une surface supérieure (304), et une surface latérale (305) s'étendant entre la surface inférieure (303) et la surface supérieure (304),
dans lequel la formation comprend le dépôt d'un mélange (101) dans une ouverture (152) d'un outil de production (151) et la formation de la particule abrasive façonnée de précurseur (200), et dans lequel la formation comprend en outre le retrait du mélange (101) de l'ouverture (152) avant le séchage complet du mélange (101) dans l'ouverture (152), et
dans lequel le traitement comporte la commande d'une opération de séchage pour fracturer les particules abrasives façonnées de précurseur (200) le long de l'au moins un vecteur de concentration de contrainte prédéterminé (221) afin de former une pluralité de fractions de particule abrasive façonnée (301, 302),
dans lequel la particule abrasive façonnée de précurseur (200) comprend une forme bidimensionnelle telle que vue de haut en bas, ayant au moins un coin interne (210) et un coin externe (211), dans lequel le coin interne (210) est plus proche d'un point médian (213) du corps (201) que le coin externe (211),
dans lequel l'au moins un coin interne (210) définit un point de concentration de contrainte prédéterminé du corps (201),
dans lequel le corps (201) comprend au moins une partie concave (214) définissant un coin interne (210),
dans lequel le mélange (101) comporte un gel formé d'un matériau en poudre céramique et d'un liquide,
dans lequel le gel est un matériau de forme stable ayant la capacité de maintenir sensiblement une forme donnée même à l'état vert.

2. Procédé selon la revendication 1, dans lequel le vecteur de concentration de contrainte prédéterminé (221) s'étend à travers un point médian (213) du corps (201).

3. Procédé selon la revendication 1, dans lequel la particule abrasive façonnée de précurseur (200) comprend un premier vecteur de concentration de contrainte prédéterminé (221) et un second vecteur de concentration de contrainte prédéterminé (222), et dans lequel le premier vecteur de concentration de contrainte prédéterminé (221) et le second vecteur de concentration de contrainte prédéterminé (222) se croisent.

4. Procédé selon la revendication 1, dans lequel la fracturation comporte la formation d'au moins une première fraction de particule abrasive façonnée (301) et d'une seconde fraction de particule abrasive façonnée (302).

5. Procédé selon la revendication 1, et dans lequel le surface supérieure (304) définit une forme de pelle comportant une surface concave (306) qui a une région de pointe (307) comportant au moins un coin de pointe (308) et au moins une région arrière (309) définissant au moins un coin arrière (310).

6. Procédé selon la revendication 5, dans lequel le coin de pointe (308) a une acuité de pointe qui est supérieure à une acuité de pointe de l'au moins un coin arrière (310).

7. Fraction de particule abrasive façonnée (301, 302) comprenant un corps (301) qui comporte une surface inférieure (303), une surface supérieure (304), et une surface latérale (305) s'étendant entre la surface inférieure (303) et la surface supérieure (304), dans laquelle le surface supérieure (304) définit une forme de pelle comportant une surface concave (306) qui a une région de pointe (307) comportant au moins un coin de pointe (308) et au moins une région arrière (309) définissant au moins un coin arrière (310), dans laquelle l'au moins un coin de pointe (308) a une acuité de pointe qui est supérieure à une acuité de pointe de l'au moins un coin arrière (310),
dans laquelle la surface supérieure (304) comprend un premier bord supérieur (312) et un second bord supérieur (313), dans laquelle le premier bord supérieur (312) et le second bord supérieur (313) définissent une partie de la forme de pelle et se croisent au niveau de la région de pointe (307),
dans laquelle la région arrière (309) définit au moins un bord arrière (314) joignant la surface supérieure (304) et la surface latérale (305), et dans laquelle le bord arrière (314) a une acuité de bord inférieure à une acuité du premier bord supérieur (312) ou du second bord supérieur (313), et en outre, dans laquelle l'au moins un bord arrière (314) a un contour plus arrondi par rapport au premier bord supérieur (312) et au second bord supérieur (313).

8. Fraction de particule abrasive façonnée (301, 302) selon la revendication 7, dans laquelle l'au moins un coin de pointe (308) a une acuité de pointe qui est d'au moins environ 50 % supérieure à l'acuité de pointe de l'au moins un coin arrière (310).

9. Fraction de particule abrasive façonnée (301, 302) selon la revendication 7, dans laquelle la surface inférieure (303) comprend un contour arrondi.

10. Fraction de particule abrasive façonnée (301, 302) selon la revendication 7, dans laquelle l'au moins un coin arrière (310) et l'au moins un coin de pointe (308) sont situés sur la surface concave (306) et l'au moins un coin arrière (310) est situé au niveau d'une position plus élevée sur la surface concave (306) par rapport à l'au moins un coin de pointe (308).
